Europäisches Patentamt

(19) European Patent Office

Office européen des brevets

(11) Publication number: **0 123 663**
**B1**

# (12) EUROPEAN PATENT SPECIFICATION

(45) Date of publication of patent specification: **14.01.87**

(51) Int. Cl.⁴: **F 16 J 15/34**

(21) Application number: **84850106.0**

(22) Date of filing: **03.04.84**

(54) **A seal device for shafts.**

(30) Priority: **21.04.83 SE 8302247**

(43) Date of publication of application:
**31.10.84 Bulletin 84/44**

(45) Publication of the grant of the patent:
**14.01.87 Bulletin 87/03**

(84) Designated Contracting States:
**DE FR GB IT**

(56) References cited:
**US-A-3 061 319**
**US-A-3 507 504**

(73) Proprietor: **AB Grindex**
**Box 538**
**S-136 25 Handen (SE)**

(72) Inventor: **Björklund, Bengt**
**Midgardsvägen 10**
**S-136 44 Handen (SE)**

(74) Representative: **Larsson, Sten**
**Flygt AB Box 1309**
**S-171 25 Solna (SE)**

## Description

This invention concerns a device for attaching the rotating ring in a mechanical seal device where the seal ring is arranged rotary proof in a cup which is axially pressed and locked to a shoulder by an impeller mounted on the seal shaft (US—A—3507504).

These types of seals are used for several different types of machines containing rotating shafts, for instance submersible machines such as pumps and turbines.

A problem that arises with this type of seals is the connection of the rotating seal ring, that is, how this shall be fixed or locked to the rotating shaft. This problem has increased lately when the material in the seal rings has been replaced by hard metal and ceramics, which are expensive to machine and have great demands on flatness and exact mounting.

According to a known construction for submersible pumps, the rotating seal ring is pressed axially against a shoulder on the rotating shaft. This pressure is obtained by the pump impeller via a disc spring.

The rigid attachment between seal ring and shaft can however sometimes create a problem. Too big tolerances in shaft and spring may cause the seal ring to take an inclined position which of course impairs its sealing ability as well as its length of life.

According to the invention the problem to obtain a perfect mounting of the rotating seal ring is solved in that the cup contains a ring in a flexible material which supports the seal ring axially, the ring being provided with an axially directed collar situated between the seal ring and the shaft, thus sealing this space and centering the seal ring on the shaft.

The invention is described more closely below with reference to the enclosed drawing.

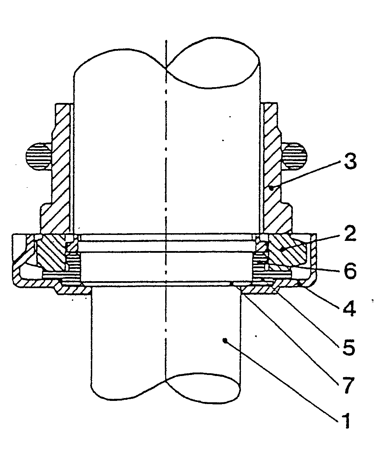

In the drawing 1 stands for a rotatable shaft sealed by a mechanical seal comprising rotating and a non-rotating ring 2 and 3 resp, 4 stands for a cup, 5 a flexible ring having a collar 6 and 7 stands for a shoulder on the shaft 1.

The rotating seal ring 2 is thus mounted within the cup 4 in such a way that it can not be turned relative the cup. This is preferably obtained by a bulge in the cup which fits with a corresponding notch in the seal ring.

A ring 5 of a flexible material is arranged between the bottom of the cup 4 and the seal ring 2 for absorbing any irregularities in the surfaces. The ring 5 is also provided with an axially directed collar or bead 6 meant to take up the space between the shaft 1 and the inner surface of the seal ring. This collar will then seal this space and at the same time it centers the seal ring on the shaft similar to what a conventional O-ring does.

The cup 4 is in a usual way pressed against the shoulder 7 by help of an impeller attached to the shaft and is then non-turnable locked to the shaft.

The non-rotatable seal ring 3 is attached to a non-rotatable part in the machine and is pressed axially by spring force against the rotating seal ring 2 in a usual manner.

According to the invention is thus obtaned a simple attachment of the rotating ring in a mechanical seal device which ensures a correct mounting position and which is relatively non sensitive to tolerance variations in the components.

## Claim

1. A device for attaching the rotating ring in a mechanical seal device, where the seal ring is arranged rotary proof in a cup (4) which is axially pressed and locked to a shoulder by an impeller mounted on the sealed shaft, characterized in, that the cup (4) contains a ring (5) in a flexible material which supports the seal ring (2) axially, the ring (5) being provided with an axially directed collar (6) situated between the seal ring (2) and the shaft (1), thus sealing this space and centering the seal ring on the shaft.

## Patentanspruch

Vorrichtung zum Befestigen des Drehrings in einer mechanischen Dichtungsvorrichtung, bei der der Dichtungsring drehfest in einem Becher (4) angeordnet ist, welcher von einem auf der abgedichteten Welle befestigten Flügelrad in axialer Richtung gegen einen Ansatz gedrückt und an diesem arretiert wird, dadurch gekennzeichnet, daß der Becher (4) einen Ring (5) aus elastischen Material enthält, der den Dichtungsring (2) in axialer Richtung trägt und der mit einem zwischen dem Dichtungsring (2) und der Welle (1) angeordneten, axial gerichteten Kragen (6) versehen ist, wodurch dieser Raum abgedichtet und der Dichtungsring auf der Welle zentriert ist.

## Revendication

Dispositif pour la fixation de la bague rotative dans un dispositif de joint mécanique, dans lequel la bague d'étanchéité est disposée sans possibilité de rotation dans une coupelle (4) qui est axialement pressée et bloquée sur un épaulement par un rotor monté sur l'arbre à joint étanche, caractérisé en ce que la coupelle (4) contient un anneau (5) fait d'un matériau flexible qui supporte axialement la bague d'étanchéité (2), l'anneau (5) étant pourvu d'un collet (6) dirigé axialement et situé entre la bague d'étanchéité (2) et l'arbre (1), assurant ainsi l'étanchéité de cet espace et centrant la bague d'étanchéité sur l'arbre.